# EUROPÄISCHE PATENTSCHRIFT

(11) **EP 0 919 348 B1**
(45) Veröffentlichungstag und Bekanntmachung des Hinweises auf die Patenterteilung: **22.08.2001**
(21) Anmeldenummer: 97118662.2
(22) Anmeldetag: 28.10.1997
(51) Int. Cl.: B29C 33/38, B29C 33/42, B29C 39/00

(54) **Verfahren und Vorrichtung zur Herstellung eines Leuchtenglases**
Process and device for the manufacturing of a lighting glass
Procédé et dispositif de fabrication d'un vitrage pour éclairage

(43) Veröffentlichungstag der Anmeldung: 02.06.1999
(73) Patentinhaber: Hofmann, Michael, 85057 Ingolstadt (DE)
(72) Erfinder: Schurer, Marcus, 85055 Ingolstadt (DE); Neumann, Werner, 86633 Joshofen (DE); Hofmann, Michael, 85057 Ingolstadt (DE)
(74) Vertreter: Staudt, Hans-Peter, Dipl.-Ing.

(56) Entgegenhaltungen:
- EP-B- 0 309 507
- DE-A- 3 035 504
- US-A- 4 747 981
- US-A- 5 013 228

## Beschreibung

Die Erfindung betrifft ein Verfahren zur Herstellung von Leuchtengläsern und ein Hilfsmodell für die Herstellung einer Gießform zum Gießen eines Leuchtenglases, insbesondere für Gläser von Leuchten an Fahrzeugen, beispielsweise Heckleuchten, wobei sich das erfindungsgemäße Verfahren insbesondere für Prototypen und Kleinserien eignet.

Gläser für Kraftfahrzeugleuchten, beispielsweise Heckleuchten, werden als Serienteil üblicherweise im Spritzgießverfahren hergestellt. Derartige Heckleuchtengläser sind oftmals äußerst komplexe Bauteile, da sie verschiedene Bereiche aufweisen müssen, beispielsweise einen Blinkerbereich, einen Bremslichtbereich, einen Rücklichtbereich, einen Rückfahrlichtbereich und dergleichen, die sich nicht nur farblich unterscheiden, sondern zudem unterschiedliche und exakt definierte Strukturen aufweisen, um eine vorbestimmte Streu- oder Rückstrahlfunktion zu erfüllen und eine vorbestimmte Lichtdurchlässigkeit aufzuweisen, die zu einer bestimmten Helligkeit führt. Die Komplexität derartiger Heckleuchten und das aus Kostengründen für den Serieneinsatz übliche Spritzgießverfahren haben zur Folge, daß diese Art der Herstellung von Heckleuchten für Prototypen aus Kosten- und Zeitgründen nicht in Frage kommt.

Statt dessen werden für die Herstellung von Leuchtengläsern für Prototypen, insbesondere für die Herstellung von Heckleuchtengläsern von Prototypen, üblicherweise zwei andere Herstellungsverfahren angewandt, nämlich ein Vakuumtiefziehen über ein Modell, welches nach einem bestimmten Original-Datensatz gefräst wurde, oder ein NC-Fräsen nach diesem Original-Datensatz direkt in Plexiglas oder Acryl. Diese beiden Herstellungsverfahren ermöglichen es zwar, einen Prototyp einer Heckleuchte schneller und kostengünstiger herzustellen als nach dem für den Serieneinsatz üblichen Spritzgießverfahren, die durch diese beiden Verfahren hergestellten Prototypen weisen jedoch hinsichtlich einer Vielzahl von Beurteilungskriterien gravierende Nachteile gegenüber einem Serienheckleuchtenglas auf. So verlieren die tiefgezogenen Teile beim Erkalten ihre Maßhaltigkeit, so daß die Außen- und Innenkontur, die Strukturen innerhalb der einzelnen Kammern und die Kammeraufteilung nicht dem Original-Datensatz entsprechen. Ein nach diesem Verfahren hergestelltes Heckleuchtenglas weicht sowohl in seinen Abmessungen als auch in seinem optischen Eindruck deutlich von dem späteren Serienteil ab und ist insbesondere als Referenzmodell für die Konstruktion nicht verwendbar.

Ein direkt in Plexiglas oder Acryl gefrästes Modell weist zwar eine dem Original-Datensatz entsprechende Außenkontur auf, der optische Eindruck unterscheidet sich jedoch ebenfalls gravierend von demjenigen des späteren Serienmodells. Die Oberflächenglätte läßt sich zwar durch Polieren aufbessern, die Innenstruktur und Farbe der einzelnen Kammerbereiche unterscheidet sich jedoch grundlegend von dem späteren Serienmodell, so daß insbesondere hinsichtlich der Durchstrahlung und Rückstrahlwirkung erhebliche Unterschiede auftreten.

Die gegenüber dem durch aufwendiges Spritzgießverfahren hergestellten Serienteil deutlich abfallende Qualität der Prototypen der Heckleuchtengläser hat zur Folge, daß den Anforderungen des Entwicklers eines Kraftfahrzeugs an den Prototyp einer Heckleuchte bislang in wesentlichen Punkten nicht entsprochen werden konnte.

Aus der US-A-4,747,981 ist ein Verfahren zum Gießen eines Reflektors aus lichtdurchlässigem Urethan bekannt, demzufolge ein Gießbauteil aus Metall oder einem starren Kunststoff an einer Gießform befestigt wird, wobei die Facetten dieses Gießbauteils durch mechanisches Bearbeiten hergestellt werden.

Das der Erfindung zugrunde liegende technische Problem besteht darin, ein Verfahren zur Herstellung von Leuchtengläsern und ein Hilfsmodell für die Herstellung einer Gießform zum Gießen eines Leuchtenglases bereitzustellen, das bzw. die die Herstellung von Leuchtengläsern, insbesondere von Gläsern für die Heckleuchten von Fahrzeugen ermöglicht, welche die Beurteilungsmöglichkeiten für den Stylisten verbessern, als Referenzstücke für den Konstrukteur und als Prüfstücke für den Karosseriebauer geeignet sind, als Hilfsmittel für Ausleuchtuntersuchungen des künftigen Leuchtenherstellers dienen können und eine bessere Beurteilung des Gesamteindrucks im Einbauzustand im Cubing, Datenkontrollmodell oder Prüf-Cubing ermöglichen, wobei die Herstellung schnell und kostengünstig erfolgen soll und vorzugsweise eine Sofortausstattung von Prototypen für Fahrversuche möglich sein soll.

Die nach dem erfindungsgemäßen Verfahren bzw. mit der erfindungsgemäßen Vorrichtung hergestellten Leuchtengläser sollen hinsichtlich der Maßhaltigkeit und in Bezug auf Struktur und Optik den späteren Seriengläsern sehr nahe kommen oder gar entsprechen.

Eine dieses technische Problem lösende Vorrichtung und ein entsprechendes Verfahren sind in den Patentansprüchen angegeben.

Insbesondere umfaßt die Erfindung ein Hilfsmodell für die Herstellung einer Gießform zum Gießen eines Leuchtenglases gemäß Patentanspruch 1. Dieses Hilfsmodell weist einen modularen Aufbau auf und verfügt neben einer Grundform über mindestens ein Strukturelement, das in eine Ausnehmung der Grundform eingefügt bzw., je nach Geometrie des zu fertigenden Leuchtenglases, mit der Grundform verbunden ist. Das Strukturelement dient der Bereitstellung einer bestimmten Struktur in dem Bereich der Gießform, der dem Bereich des Hilfsmodells entspricht, an bzw. in dem sich das Strukturelement befindet, so daß in dem entsprechenden Bereich des Leuchtenglases, das mittels der Gießform hergestellt wird, ebenfalls eine entsprechende Struktur bereitgestellt wird.

Vorteilhafterweise wird mindestens ein Grundstrukturelement bereitgestellt, das eine vorbestimmte Oberflächenbeschaffenheit und Materialstärke aufweist. Hierzu wird ein starrer Werkstoff entsprechend bearbeitet, vorzugsweise durch Fräsen oder dergleichen. Von diesem Grundstrukturelement wird eine Form aus Silikon oder dergleichen angefertigt, die zum Duplizieren des Grundstrukturelements dient, wobei ein flexibler Kunststoff für das Duplikat verwendet wird. Hierdurch wird ein flexibler flächiger Bogen erzeugt, der die gleiche Oberflächenbeschaffenheit und Materialstärke wie das Grundstrukturelement aufweist, im Gegensatz zu dem starren Grundstrukturelement jedoch flexibel ist und so in nahezu beliebiger sphärischer Form gebogen werden kann. Aus diesem Bogen kann ein Strukturelement beliebigen Umrisses herausgeschnitten werden, das in die Ausnehmung des Hilfsmodells eingelegt werden kann. Als Material für den flächigen Bogen bzw. das Strukturelement wird vorzugsweise Kunststoff verwendet, beispielsweise Polyurethan, der eine Shore-Härte von vorzugsweise 35 aufweist.

Die Grundform des Hilfsmodells ist vorzugsweise aus Kunststoff gefertigt, wobei ein zur Herstellung von Lehren übliches Material wie beispielsweise Ureol (Handelsname) besonders gut geeignet ist. Eine derartige, vorzugsweise einstückige Grundform aus Lehrenmaterial weist eine oder mehrere Ausnehmungen oder Vertiefungen auf, in die ein oder mehrere Strukturelemente eingelegt sind. Die Ausnehmungen und die entsprechenden Strukturelemente können hierbei beispielsweise einem Blinkerbereich, einem Bremslichtbereich, einem Rücklichtbereich und einem Rückfahrlichtbereich eines Leuchtenglases einer Heckleuchte entsprechen und je nach Ausgestaltung dieses Leuchtenglases innerhalb der genannten Bereiche nochmals Unterteilungen aufweisen. Die einzelnen Teile können hierbei unterschiedliche Strukturen aufweisen, beispielsweise Prismenstrukturen oder Wellenstrukturen. Andere Bereiche können von einer vorbestimmten Rauheit sein oder vollkommen glatt.

Der Boden der Ausnehmungen der Grundform des Hilfsmodells weist einen Konturverlauf auf, der den Konturverlauf des Leuchtenglases in diesem Bereich unter Berücksichtigung der Dicke des in die Ausnehmung einzulegenden Strukturelements aufweist. Mit anderen Worten, bei eingelegtem Strukturelement weist die von der Grundform abgewandte Seite des Strukturelements die Kontur des herzustellenden Leuchtenglases auf.

Bei einer Ausführungsform der Erfindung, bei der das Hilfsmodell mehrere Strukturelemente aufweist, um verschieden strukturierte Bereiche in dem herzustellenden Leuchtenglas zu erhalten, können die Strukturelemente in der Grundform des Hilfsmodells durch Stege getrennt sein. Dies kann dadurch erfolgen, daß bei der Herstellung der Ausnehmungen in der Grundform das Stegmaterial stehengelassen wird. Alternativ hierzu können auch den Stegen entsprechende Elemente in eine größere Ausnehmung eingefügt sein. Es versteht sich, daß nicht nur die Strukturelemente unterschiedlich strukturierte Oberflächen aufweisen können, sondern auch unterschiedliche Oberflächenbereiche der Grundform unterschiedlich strukturiert sein können. So können beispielsweise bestimmte Bereiche unterteilende Stege mit einer sehr glatten Oberfläche ausgeführt sein, was zur Folge hat, daß die entsprechenden Bereiche in dem herzustellenden Leuchtenglas klar erscheinen, während ein umlaufender Bereich der Grundform mit einer angerauhten Oberfläche ausgeführt sein kann, was zur Folge hat, daß der entsprechende umlaufende Bereich in dem herzustellenden Leuchtenglas ein mattes Aussehen erhält.

Die mittels des Hilfsmodells hergestellte Gießform ist vorzugsweise zweiteilig ausgeführt, wobei ein Teil die Innenkontur des Leuchtenglases bestimmt, und der andere Teil die Außenkontur des Leuchtenglases bestimmt. Da die Außenkontur oder Außenseite eines Leuchtenglases oftmals glatt ist, kann das Hilfsmodell zur Herstellung des die Außenkontur des Leuchtenglases bestimmenden Teils der Gießform einteilig ausgeführt sein. Mit anderen Worten, wenn eine Seite eines Leuchtenglases eine einheitliche, insbesondere eine glatte Oberflächenstruktur aufweist, kann das zur Herstellung des diese Kontur bestimmenden Teils der Gießform bestimmte Hilfsmodell einteilig mit einer entsprechend strukturierten bzw. glatten Oberfläche ausgeführt sein.

Die Gießform ist vorzugsweise aus Silikon gefertigt und weist eine Shore-Härte im Bereich von etwa 40 bis 45 auf.

Das erfindungsgemäße Verfahren zur Herstellung eines Leuchtenglases schließt ein die Bereitstellung von mindestens einem Strukturelement, das Herstellen einer Grundform eines Hilfsmodells zur Herstellung einer Gießform, das Ausbilden mindestens einer Ausnehmung in der Grundform des Hilfsmodells zur Aufnahme des Strukturelements, das Einlegen des Strukturelements in die Ausnehmung, das Herstellen der Gießform als Negativform der Hilfsform und das Gießen des Leuchtenglases unter Verwendung der mittels der Hilfsform hergestellten Gießform.

Das oder die Strukturelemente werden vorzugsweise dadurch hergestellt, daß zunächst ein Grundstrukturelement mit einer vorbestimmten Oberflächenbeschaffenheit und Stärke bereitgestellt wird. Dies kann beispielsweise eine Platte aus Metall oder Hartkunststoff sein, die mittels mechanischer Bearbeitung oder sonstiger Verfahren mit einer bestimmten Oberflächenstruktur versehen wird. Anschließend wird diese Platte auf eine bestimmte Materialstärke gebracht. Von dieser als Grundstrukturelement dienenden Platte wird eine Form, vorzugsweise aus Silikon, angefertigt, mittels derer ein Duplikat des Grundstrukturelements angefertigt werden kann. Hierzu wird ein Abguß aus Kunststoff, vorzugsweise Polyurethan mit einer Shore-Härte von ca. 35 angefertigt. Hierdurch wird ein flächiger Bogen erhalten, dessen Oberflächenstruktur der vorbestimmten Oberflächenstruktur des Grundstrukturelements entspricht und das auf der hiervon abgewandten Seite vorzugsweise glatt ist. Aus dieser flexiblen Platte kann ein Strukturelement beliebigen Umrisses herausgeschnitten werden. Der Umriß entspricht hierbei dem Umriß desjenigen Bereichs des herzustellenden Leuchtenglases, der eine entsprechende Struktur aufweisen soll. Aufgrund der Flexibilität des Strukturelements kann sich dieses dem Konturverlauf des Bodens der Ausnehmung des Hilfsmodells anpassen, d.h. es kann in gewünschter Form gekrümmt werden, so daß die vorbestimmte Oberflächenstruktur in sphärischer Form dargestellt werden kann.

Leuchtengläser im Kraftfahrzeugbereich weisen oftmals Bereiche unterschiedlicher Farbe auf. Diese können in einer vorteilhaften Ausführungsform des erfindungsgemäßen Verfahrens so hergestellt werden, daß zunächst ein einfarbiges Leuchtenglas gegossen wird, dieses nach dem Aushärten zerschnitten und der oder die nächsten Farbsegmente in einem weiteren Gießvorgang angegossen werden. Das Gießen des Leuchtenglases erfolgt vorzugsweise mittels Vakuumtechnik.

Sowohl im Zusammenhang mit dem erfindungsgemäßen Verfahren als auch im Zusammenhang mit der erfindungsgemäßen Vorrichtung ist der Begriff der Ausnehmung in der Grundform im weitesten Sinne zu verstehen. Dies bedeutet, daß nicht notwendigerweise eine tatsächliche Vertiefung an der jeweiligen Stelle der Grundform ausgebildet sein muß, sondern daß jegliche Bereitstellung einer Fläche zur Aufnahme eines bestimmten Strukturelements als Herstellen einer Ausnehmung im Sinne der Erfindung zu verstehen ist.

Des weiteren ist darauf hinzuweisen, daß der Begriff Leuchtenglas sowohl hinsichtlich des erfindungsgemäßen Verfahrens als auch hinsichtlich der erfindungsgemäßen Vorrichtung im weitesten Sinne zu verstehen ist und nicht auf gläserne oder glasartige Abdeckungen von Leuchten, insbesondere Kraftfahrzeugleuchten, beschränkt ist, sondern Lichtscheiben jeglicher Art einschließt sowie jegliche gläserne bzw. glasartige oder aus ganz oder teilweise transparentem oder farbigem Kunststoff hergestellte entsprechende Bauteile einschließt, insbesondere neben dem Bereich der Kraftfahrzeugindustrie in den Bereichen der Luft- und Raumfahrt, der Elektroindustrie und der optischen Industrie.

Obwohl die Prototypenherstellung in der Kraftfahrzeugindustrie ein bevorzugtes Anwendungsgebiet der Erfindung ist, ist diese nicht hierauf beschränkt, sondern kann beispielsweise Kleinserienproduktionen auf diesem oder anderen Gebieten einschließen.

Die Erfindung wird im folgenden anhand bevorzugter Ausführungsbeispiele unter Bezug auf die beigefügte Zeichnung näher erläutert, in der
Fig. 1 eine schematische Draufsicht auf eine Grundform eines Hilfsmodells zur Herstellung einer Gießform gemäß einer Ausführungsform der Erfindung zeigt,
Fig. 2 einen schematischen Schnitt durch die in Fig. 1 gezeigte Grundform längs der Linie A - A mit eingelegtem Strukturelement zeigt,
Fig. 3 eine schematische auseinandergezogene perspektivische Darstellung eines Hilfsmodells modularen Aufbaus zeigt, bei dem ein Strukturelement aus der Grundform entnommen ist,
Fig. 4 eine schematische perspektivische Darstellung des Strukturelements ist, das aus einem flächigen Abguß eines Grundstrukturelements herausgeschnitten ist,
Fig. 5 schematisch ein Grundstrukturelement zeigt, das als Negativform für die Oberfläche des Strukturelements dient,
Fig. 6 eine vergrößerte Darstellung einer Ausführungsform der Oberflächenstruktur des Grundstrukturelements zeigt und
Fig. 7 eine schematische Draufsicht auf ein weiteres Ausführungsbeispiel eines Hilfsmodells zeigt.

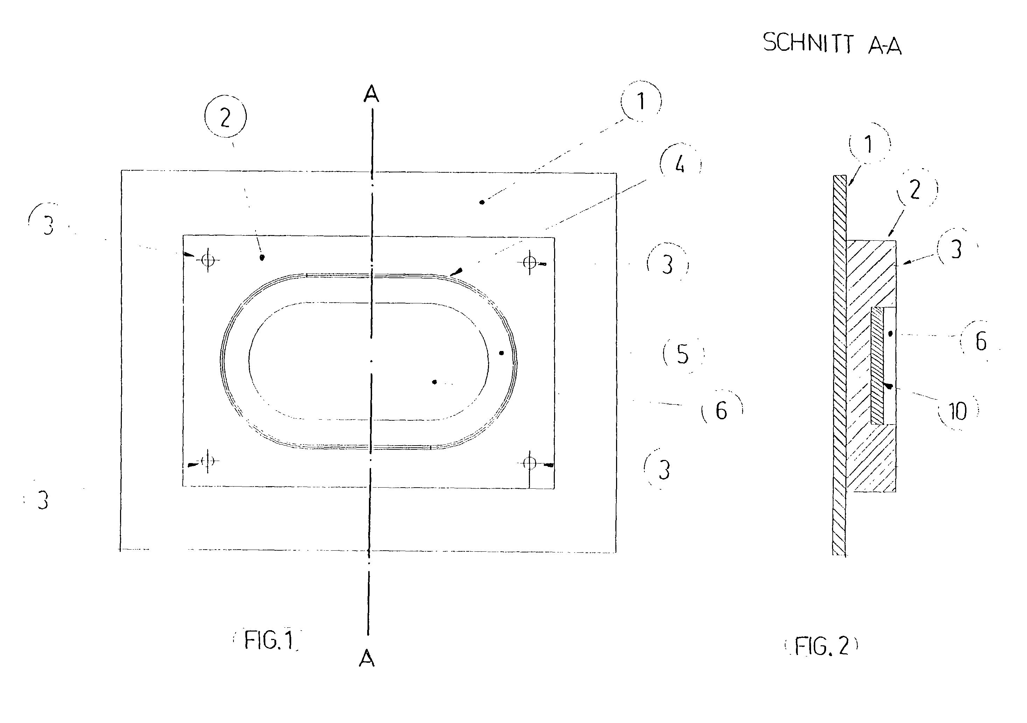

Fig. 1 zeigt eine Draufsicht auf ein Hilfsmodell zur Herstellung einer Gießform einer Ausführungsform der erfindungsgemäßen Vorrichtung zur Herstellung eines Leuchtenglases. Auf einer Grundplatte 1 ist eine Grundform 2 befestigt. Die Grundform 2 weist Fixierungen 3, eine umlaufende Kante 4, einen hochglanzpolierten Bereich 5 und eine Ausnehmung 6 auf.

Fig. 2 zeigt eine Schnittdarstellung längs der Linie A - A, wobei die umlaufende Kante und der hochglanzpolierte Bereich in Fig. 2 nicht dargestellt sind. Abweichend von Fig. 1 ist in Fig. 2 jedoch ein Strukturelement 10 dargestellt, das in die Ausnehmung 6 eingelegt ist.

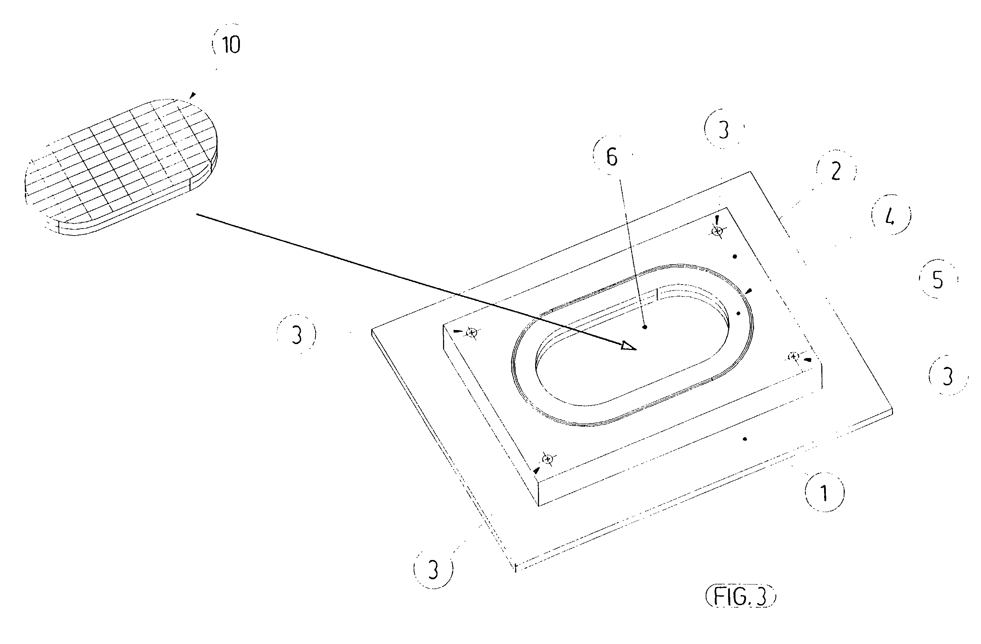

Fig. 3 zeigt in einer perspektivischen Darstellung das Hilfsmodell und das von dem Hilfsmodell getrennt dargestellte Strukturelement 10.

Die Grundform 2 ist aus einem Material hergestellt, das für die Herstellung von Lehren geeignet ist, beispielsweise aus Ureol (Handelsname). Der mechanischen Bearbeitung der Grundform 2 liegt eine CAD-Konstruktion zugrunde, der die Geometrie des herzustellenden Leuchtenglases, des Umrisses, der Formteilungsebene und dergleichen als Datensatz zugrunde liegt. Basierend hierauf wird ein Fräsprogramm erstellt und der Grundform-Rohling wird nach einem entsprechenden CAM-Programm gefräst, wobei insbesondere die Ausnehmung 6 und der umlaufende Rand 4 hergestellt werden. Bei der Dimensionierung der Ausnehmung 6 wird die Dicke des einzulegenden Strukturelements 10 mit in Betracht gezogen.

Je nach Art der gewünschten Oberflächen des herzustellenden Leuchtenglases können die Oberflächen bestimmten weiteren Behandlungsschritten unterzogen werden, beispielsweise Oberflächenglätten und Grundieren, Zwischenschleifen und Hochglanzlackieren, Feinzwischenschleifen und Hochglanzlackieren sowie Feinschleifen und Polieren.

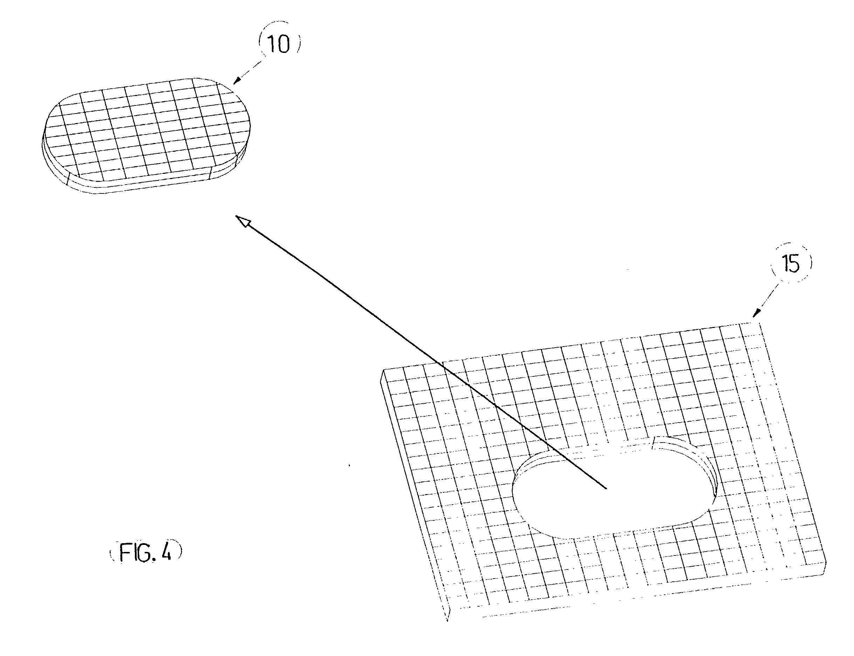

Fig. 4 zeigt das Strukturelement 10 und eine flächige Lage bzw. einen Bogen 15, aus dem das Strukturelement 10 in der gewünschten Form bzw. dem gewünschten Umriß herausgetrennt bzw. herausgeschnitten wurde. Der Bogen 15 ist vorzugsweise aus Polyurethan hergestellt und weist eine Shore-Härte von etwa 35 auf.

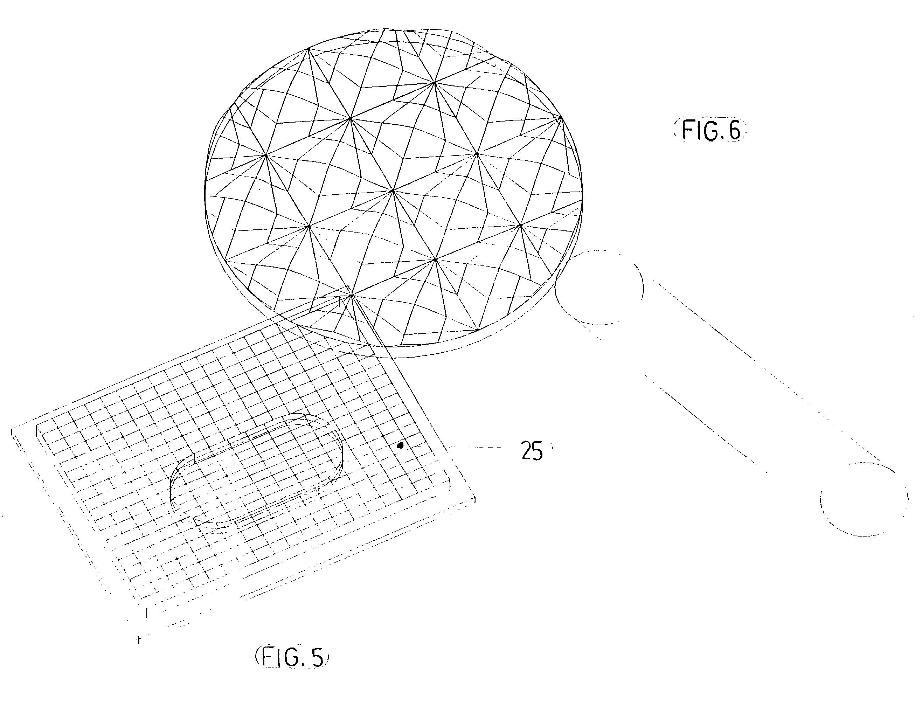

Zur Herstellung des Bogens 15 wird ein Grundstrukturelement 25 verwendet, das in Fig. 5 dargestellt ist. Das Grundstrukturelement 25 weist eine Oberfläche auf, die eine bestimmte Struktur hat, beispielsweise eine Prismenstruktur, eine Wellenstruktur oder sonstige geometrische Formen, die für die Erstellung einer Kissenoptik, Fresneloptik, Rückstrahleroptik, falscher Rückstrahleroptik etc. erforderlich ist, die für bestimmte Bereiche von Leuchtengläsern im Kraftfahrzeugbereich, beispielsweise einen Blinkerbereich, einen Bremslichtbereich, einen Rücklichtbereich, einen Rückfahrlichtbereich etc. erwünscht und teilweise gesetzlich gefordert sind. Eine vergrößerte Darstellung einer derartigen geometrischen Oberflächenstruktur ist in Fig. 6 dargestellt.

Das Grundstrukturelement 25 ist ein gefräster Block aus Kunststoff oder einem anderen zur mechanischen Bearbeitung geeigneten starren Material, der durch vorzugsweise mechanische Bearbeitung mit einer bestimmten gewünschten Oberfläche versehen und auf eine bestimmte Materialstärke gebracht wird. Dieses Grundstrukturelement wird sodann dupliziert, indem eine Form aus Silikon oder einem anderen geeigneten Werkstoff angefertigt und aus dieser Form ein Duplikat des Grundstrukturelements aus einem Kunststoff gefertigt wird, der flexibel ist. Dieses flexible Duplikat des Grundstrukturelements 25 ist die flächige Platte 15, aus der das Strukturelement 10 mit dem gewünschten Umriß ausgeschnitten werden kann.

Auf diese Art und Weise ist es möglich, eine beliebige Oberflächenstruktur kostengünstig zu erstellen und diese Oberflächenstruktur nicht nur in ebener Form, sondern in praktisch beliebiger sphärischer Form in dem Hilfsmodell bereitzustellen.

Nachdem das Strukturelement 10 in die Ausnehmung 6 eingelegt wurde, wird mittels dieser Hilfsform eine Gießform aus Silikon (nicht gezeigt) erstellt. Diese Form bestimmt die strukturierte Seite des Leuchtenglases. Für die hiervon abgewandte Seite des Leuchtenglases, die oftmals von glatter Oberfläche ist, wird eine zweite Silikonform (nicht gezeigt) erstellt. Bei einer glatten Oberfläche des Leuchtenglases kann die zur Herstellung dieser zweiten Silikonform verwendete Hilfsform (nicht dargestellt) einteilig sein, d.h. lediglich aus einer entsprechend ausgeformten Grundform bestehen.

Nach dem Zusammenfügen der beiden Silikonformen wird ein Leuchtenglas mittels Vakuumtechnik abgegossen.

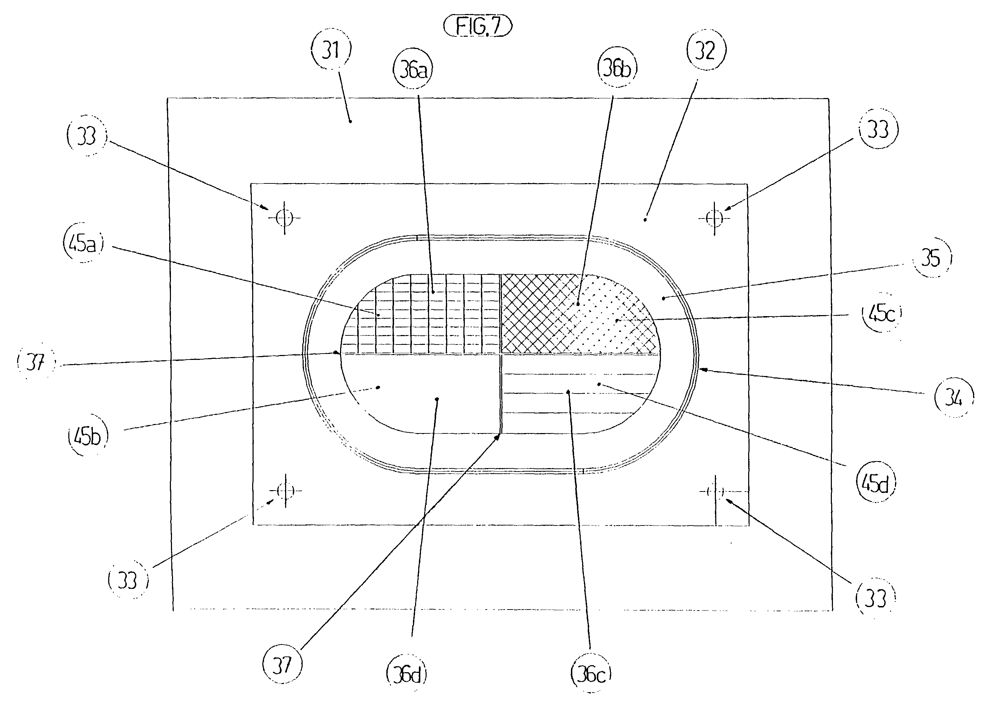

Fig. 7 zeigt eine weitere Ausführungsform eines Hilfsmodells, das eine auf einer Grundplatte 31 befestigte Grundform 32 zeigt, welche Fixierungen 33, eine umlaufende Kante 34, einen hochglanzpolierten Bereich 35 und vier Ausnehmungen 36a, 36b, 36c und 36d aufweist. Zwischen den Ausnehmungen 36a - d befinden sich Stege 37. In dem dargestellten Ausführungsbeispiel sind die Stege 37 bei der Herstellung der Ausnehmungen 36a - d stehengelassen worden, so daß sie materialeinheitlich mit der Grundform 32 verbunden sind. Hiervon abweichend ist es jedoch möglich, derartige Stege nachträglich einzulegen.

In die Ausnehmungen 36a - d sind Strukturelemente 45a - d eingelegt, die unterschiedliche Oberflächenstrukturen aufweisen. Hierdurch kann ein Leuchtenglas gefertigt werden, das mehrere Bereiche mit unterschiedlichen Strukturen aufweist.

## Patentansprüche

1. Hilfsmodell für die Herstellung einer Gießform zum Gießen eines Leuchtenglases, wobei
a) das Hilfsmodell (1) einen modularen Aufbau hat und
b) neben einer Grundform (2) mindestens ein Strukturelement (10) aufweist,
c) das in eine Ausnehmung (6) der Grundform (2) eingefügt ist
d) und der Bereitstellung einer bestimmten Oberflächenstruktur in dem entsprechenden Bereich der Gießform dient, wobei das Strukturelement (10) in der Ausnehmung (6) der Grundform (2), bedingt durch einen gekrümmten Konturverlauf des Bodens der Ausnehmung (6), eine Formveränderung erfährt,
e) wobei das Strukturelement (10) eine Flexibilität und Materialstärke aufweist, die ein Anpassen an den gekrümmten Konturverlauf des Bodens der Ausnehmung (6) ermöglicht.

2. Hilfsmodell nach Anspruch 1, gekennzeichnet durch mindestens ein Grundstrukturelement (25) zur Herstellung des flexiblen Strukturelements (10), wobei das Grundstrukturelement (25) aus einem mechanisch bearbeitbarem starren Werkstoff besteht und die Materialstärke und Oberflächenstruktur des flexiblen Strukturelements (10) aufweist.

3. Hilfsmodell nach Anspruch 1 oder 2, dadurch gekennzeichnet, daß das flexible Strukturelement (10) aus Kunststoff ist, vorzugsweise aus Polyurethan, und eine Shorehärte von vorzugsweise 35 aufweist.

4. Hilfsmodell nach einem der vorstehenden Ansprüche, dadurch gekennzeichnet, daß die Grundform (2) des Hilfsmodells aus Kunststoff, vorzugsweise aus Lehrenmaterial gefertigt ist.

5. Hilfsmodell nach Anspruch 4, dadurch gekennzeichnet, daß der Boden der Ausnehmung (6) der Grundform (2) des Hilfsmodells den Konturverlauf des Leuchtenglases in diesem Bereich unter Berücksichtigung der Dicke des in die Ausnehmung einzulegenden flexiblen Strukturelements (10) aufweist.

6. Hilfsmodell nach einem der vorstehenden Ansprüche, dadurch gekennzeichnet, daß das Hilfsmodel (1, 2) mehrere flexible Strukturelemente (45a - d) aufweist.

7. Hilfsmodell nach Anspruch 6, dadurch gekennzeichnet, daß die Oberflächen der flexiblen Strukturelemente (45a - d) unterschiedliche Strukturen aufweisen, beispielsweise Prismenstrukturen oder Wellenstrukturen, eine vorbestimmte Rauhigkeit aufweisen oder glatt sind.

8. Hilfsmodell nach Anspruch 6 oder 7, dadurch gekennzeichnet, daß die Ausnehmungen (36a - d) zur Aufnahme der flexiblen Strukturelemente (45a - d) in der Grundform (32) des Hilfsmodells durch Stege (37) getrennt sind, die bei der Herstellung der Ausnehmungen (36a - d) stehengelasssen wurden.

9. Hilfsmodell nach Anspruch 8, dadurch gekennzeichnet, daß die Grundform (2) des Hilfsmodells in verschiedenen Bereichen unterschiedliche Oberflächenstrukturen aufweist.

10. Hilfsmodell nach einem der vorstehenden Ansprüche, dadurch gekennzeichnet, daß die Gießform zweiteilig ist, wobei ein Teil die Innenkontur des Leuchtenglases und das andere Teil die Außenkontur des Leuchtenglases bestimmt, und daß die Gießform aus Silikon gefertigt ist und eine Shorehärte im Bereich von etwa 40 bis 45 hat.

11. Hilfsmodell nach Anspruch 10, dadurch gekennzeichnet, daß neben einem Hilfsmodel (1, 2) modularen Aufbaus zur Herstellung des die Innenkontur des Leuchtenglases bestimmenden Teils der Gießform ein zweites einstückiges Hilfsmodell zur Herstellung des die Außenkontur des Leuchtenglases bestimmenden Teils der Gießform vorgesehen ist.

12. Verfahren zur Herstellung eines Leuchtenglases mit den folgenden Schritten:
a) Bereitstellen von mindestens einem flexiblen Strukturelement (10), wobei das Strukturelement (10) eine Flexibilität und Materialstärke aufweist, die ein Anpassen an einen gekrümmten Konturverlauf ermöglicht,
b) Herstellen einer Grundform (2) eines Hilfsmodells (1, 2) zur Herstellung einer Gießform,
c) Ausbilden mindestens einer Ausnehmung (6) in der Grundform (2) des Hilfsmodells zur Aufnahme des flexiblen Strukturelements (10),
d) Einlegen des flexiblen Strukturelements (10) in die Ausnehmung (6), wobei das Strukturelement (10) in der Ausnehmung (6) der Grundform (2), bedingt durch einen gekrümmten Konturverlauf des Bodens der Ausnehmung (6), eine Formveränderung erfährt,
e) Herstellen der Gießform als Negativform des Hilfsmodells (1, 2) und
f) Gießen des Leuchtenglases unter Verwendung der mittels des Hilfsmodells (1, 2) hergestellten Gießform.

13. Verfahren nach Anspruch 12, dadurch gekennzeichnet, daß Schritt a) die folgenden Schritte aufweist:
Bereitstellen eines Grundstrukturelements (25) mit vorbestimmter Oberflächenbeschaffenheit und Materialstärke, indem ein starrer Werkstoff entsprechend bearbeitet wird,
Anfertigen einer Silikonform und Duplizieren des Grundstrukturelements (25) durch Abgießen mit flexiblem Kunststoff zur Bereitstellung eines flexiblen flächigen Bogens mit gleicher Oberflächenbeschaffenheit und Materialstärke wie das Grundstrukturelement und
Ausschneiden des flexiblen Strukturelements (10) aus der flächigen Negativform des Grundstrukturelements (25).

14. Verfahren nach Anspruch 12, dadurch gekennzeichnet, daß die Grundform (2) aus einem Kunststoff, vorzugsweise aus einem Lehrenmaterial wie Ureol (Handelsname) hergestellt wird.

15. Verfahren nach Anspruch 12, dadurch gekennzeichnet, daß die Ausbildung der Ausnehmung (6) durch Fräsen erfolgt und unter Berücksichtigung der Dicke des flexiblen Strukturelements (10) so durchgeführt wird, daß der Boden der Ausnehmung (6) der Grundform (2) des Hilfsmodells den Konturverlauf des Leuchtenglases in diesem Bereich unter Berücksichtigung der Dicke des in die Ausnehmung einzulegenden flexiblen Strukturelements (10) aufweist.

16. Verfahren nach Anspruch 12, dadurch gekennzeichnet, daß das flexible Strukturelement (10) so in die Ausnehmung (6) der Grundform (2) eingelegt wird, daß es den Konturverlauf des Bodens der Ausnehmung annimmt.

17. Verfahren nach Anspruch 12, dadurch gekennzeichnet, daß die Gießform aus Silikon gefertigt, in zwei Teilen hergestellt und ihre Härte so bemessen wird, daß die Shorehärte im Bereich von etwa 40 bis 45 liegt.

18. Verfahren nach Anspruch 12, wobei das Leuchtenglas verschiedene Segmente mit unterschiedlichen Farben aufweist, dadurch gekennzeichnet, daß zuerst ein einfarbiges Leuchtenglas gegossen, dieses dann nach dem Aushärten zerschnitten und der oder die nächsten Farbsegmente in einem weiteren Gießvorgang angegossen werden.

19. Verfahren nach einem der vorstehenden Ansprüche 12 bis 18, dadurch gekennzeichnet, daß das Gießen des Leuchtenglases mittel Vakuumgießtechnik erfolgt.

## Claims

1. Device for manufacturing a casting mould for casting a lighting glass, wherein
a) said device (1) has a modular structure and
b) comprises in addition to a basic mould (2) at least one structure element (10),
c) which is inserted in a recess (6) of said basic mould (2)
d) and which serves for providing a predetermined surface structure in a corresponding area of said casting mould, wherein said structure element (10) is subjected to a change of its shape in said recess (6) of said basic mould (2) due to a curved shape of the bottom of said recess (6),
e) wherein said structure element (10) has a flexibility and thickness which allow alignment to said curved shape of the bottom of said recess (6).

2. Device according to claim 1, characterized by at least one basic structure element (25) for manufacturing said flexible structure element (10), wherein said basic structure element (25) consists of a rigid material which can be treated mechanically and which has the thickness and surface structure of said flexible structure element (10).

3. Device according to claim 1 or 2, characterized in that said flexible structure element (10) is made of plastic, preferably polyurethane, and preferably has a Shore hardness of 35.

4. Device according to any of the preceeding claims, characterized in that said basic mould (2) of said device is made of plastic, preferably material used for loam boards.

5. Device according to claim 4, characterized in that the bottom of said recess (6) of said basic mould (2) of said device has the profile of the lighting glass in this area wherein the thickness of said flexible structure element (10) to be inserted in said recess is taken into consideration.

6. Device according to any of the preceeding claims, characterized in that said device (1, 2) comprises a plurality of flexible structure elements (45a - d).

7. Device according to claim 6, characterized in that the surfaces of said flexible structure elements (45a - d) have different structures, e.g. the structure of a prism or a wave, have a predetermined roughness or are smooth.

8. Device according to claim 6 or 7, characterized in that the recesses (36a - d) for accomodating said flexible structure elements (45a - d) in the basic mould (32) of said device are seperated by webs (37) which have been retained when preparing said recesses (36a - d).

9. Device according to claim 8, characterized in that said basic mould (2) of said device has different surface structures in different areas.

10. Device according to any of the preceeding claims, characterized in that said casting mould has two parts, wherein one part determines the inner contour of said lighting glass and the other part determines the outer contour of said lighting glass, and that said casting mould is made of silicone having a Shore hardness in the range of approximately 40 to 45.

11. Device according to claim 10, characterized in that in addition to a device (1, 2) having a modular structure for manufacturing the part of the casting mould determining the inner contour of said lighting glass there is provided a second one-piece device for manufacturing the part of the casting mould determining the outer contour of said lighting glass.

12. Process for manufacturing a lighting glass, comprising the following steps:
a) providing at least one flexible structure element (10), wherein said flexible structure element (10) has a flexibility and thickness which allow alignment to a curved shape,
b) manufacturing a basic mould (2) of a device (1, 2) for manufacturing a casting mould,
c) preparing at least one recess (6) in said basic mould (2) of said device for accommodating said flexible structure element (10),
d) inserting said flexible structure element (10) into said recess (6), wherein said structure element (10) is subjected to a change of its shape in said recess (6) of said basic mould (2) due to a curved shape of the bottom of said recess (6),
e) manufacturing of said casting mould as negative mould of said device (1, 2) and
f) casting of said lighting glass using said casting mould manufactured by using said device (1, 2).

13. Method according to claim 12, characterized in that step a) comprises the following steps:
providing a basic structure element (25) having a predetermined thickness and surface structure by machining a rigid material appropriately,
manufacturing a silicone mould and duplicating said basic structure element (25) by casting using a flexible plastic for providing a flexible sheet having the same thickness and surface structure as said basic structure element and
cutting said flexible structure element (10) from the sheet-like negative mould of said basic structure element (25).

14. Method according to claim 12, characterized in that said basic mould (2) is made of plastic, preferably a material used for loam boards like Ureol (trade name).

15. Method according to claim 12, characterized in that preparing of said recess (6) is made by milling and is effected under consideration of the thickness of said flexible structure element (10) such that the bottom of said recess (6) of said basic mould (2) of said device has the profile of the lighting glass in this area wherein the thickness of said flexible structure element (10) to be inserted in said recess is taken into consideration.

16. Method according to claim 12, characterized in that said flexible structure element (10) is inserted into said recess (6) of said basic mould (2) such that it takes on the contour of the bottom of said recess.

17. Method according to claim 12, characterized in that said casting mould is made of silicone, manufactured in two pieces and has a Shore hardness in the range of approximately 40 to 45.

18. Method according to claim 12 wherein said lighting glass has a plurality of segments having different colours, characterized in that at first a lighting glass having one colour is cast, this lighting glass is cut after hardening and one or more further coloured segments are burnt on in a further casting process.

19. Method according to any of the preceeding claims 12 to 18, characterized in that casting of said lighting glass is effected by vacuum casting.

## Revendications

1. Modèle auxiliaire pour la fabrication d'un moule pour le moulage d'un vitrage pour éclairage,
a) le modèle auxiliaire (1) ayant une structure modulaire et
b) présentant outre une forme de base (2) au moins un élément structurel (10),
c) cet élément étant inséré dans un creux (6) de la forme de base
d) et servant à la mise à disposition d'une structure superficielle particulière dans la zone relative du moule, l'élément structurel (1) dans le creux (6) de la forme de base (2) subissant un changement de forme dû à l'allure courbée du contour,
e) l'élément structurel (10) présentant une flexibilité et une épaisseur du matériel qui rendent possible l'adaptation à l'allure courbée du contour du fond du creux.

2. Modèle auxiliaire selon la revendication 1, caractérisé par au moins un élément structurel de base (25) pour la fabrication de l'élément structurel flexible (10), l'élément structurel de base (25) étant constitué par une matière rigide mécaniquement ouvrable et présentant l'épaisseur et la structure superficielle de l'élément structurel flexible (10).

3. Modèle auxiliaire selon la revendication 1 ou 2, caractérisé en ce que l'élément structurel flexible (10) est en matière synthétique, préférablement en polyuréthane, ayant une dureté Shore de préférablement 35.

4. Modèle auxiliaire selon une des revendications précédentes, caractérisé en ce que la forme de base (2) du modèle auxiliaire est réalisée en matière synthétique, préférablement en matériel pour modèle.

5. Modèle auxiliaire selon la revendication 4, caractérisé en ce que le fond du creux (6) de la forme de base (2) du modèle auxiliaire présente l'allure du contour du vitrage pour éclairage dans cette zone, compte tenu de l'épaisseur de l'élément structurel flexible (10) à insérer dans le creux.

6. Modèle auxiliaire selon une des revendications précédentes, caractérisé en ce que le modèle auxiliaire (1, 2) présente plusieurs éléments structurels flexibles (45 a - d).

7. Modèle auxiliaire selon la revendication 6 caractérisé en ce que les surfaces des éléments structurels flexibles (45 a - d) présentent différentes structures, par exemple des structures à prismes ou ondulées, présentent une rugosité prédéterminée ou sont lisses.

8. Modèle auxiliaire selon la revendication 6 ou 7 caractérisé en ce que les creux (36 a - d) destinés à recevoir les éléments structurels flexibles (45 a - d) dans la forme de base (32) du modèle auxiliaire sont séparés par des nervures (37) pas éliminées lors de la fabrication des creux (36 a - d).

9. Modèle auxiliaire selon la revendication 8 caractérisé en ce que la forme de base (2) du modèle auxiliaire présente différentes structures superficielles dans différentes zones.

10. Modèle auxiliaire selon une des revendications précédentes, caractérisé en ce que le moule est en deux parties, une partie déterminant le contour intérieur du vitrage pour éclairage et l'autre partie le contour extérieur du vitrage pour éclairage et que le moule est réalisé en silicone et a une dureté Shore d'à peu près 40 à 45.

11. Modèle auxiliaire selon la revendication 10 caractérisé en ce qu'outre un modèle auxiliaire (1, 2) de structure modulaire pour la fabrication de la partie du moule déterminant le contour intérieur du vitrage pour éclairage est prévu un deuxième modèle auxiliaire en une pièce pour la fabrication de la partie du moule déterminant le contour extérieur du vitrage pou éclairage.

12. Procédé pour la fabrication d'un vitrage pour éclairage comprenant les étapes suivantes :
a) la mise à disposition d'au moins un élément structurel flexible (10), l'élément structurel (10) présentant une flexibilité et une épaisseur du matériel rendant possible l'adaptation à une allure courbée du contour,
b) la fabrication d'une forme de base (2) d'un modèle auxiliaire (1, 2) pour la fabrication d'un moule,
c) la formation d'au moins un creux (6) dans la forme de base (2) du modèle auxiliaire pour recevoir l'élément structurel flexible (10),
d) l'insertion de l'élément structurel flexible (10) dans le creux (6), l'élément structurel (10) subissant dans les creux (6) de la forme de base (2) un changement de forme dû à l'allure courbée du contour,
e) la fabrication d'un moule en tant que forme négative du modèle auxiliaire (1, 2) et
f) le moulage du vitrage pour éclairage en utilisant le moule fabriqué à l'aide du modèle auxiliaire (1, 2).

13. Procédé selon la revendication 12, caractérisé en ce que l'étape a) comprend les étapes suivantes:
la mise à disposition d'un élément structurel de base (25) avec une structure superficielle et une épaisseur du matériel prédéterminées en façonnant conformément une matière rigide,
la production d'une forme en silicone et la duplication de l'élément structurel de base (25) en coulant le moule avec matière synthétique flexible pour la mise à disposition d'un arc flexible et plan ayant la même structure superficielle et la même épaisseur du matériel que l'élément structurel de base et
le découpage de l'élément structurel flexible (10) de la forme négative plane de l'élément structurel de base (25).

14. Procédé selon le revendication 12, caractérisé en ce que la forme de base (2) est fabriquée en matière synthétique, préférablement en matériel pour modèle comme Ureol (désignation commerciale).

15. Procédé selon la revendication 12, caractérisé en ce que la formation du creux (6) se fait par fraisage et est réalisée compte tenu de l'épaisseur de l'élément structurel flexible (10) de telle façon que le fond du creux (6) de la forme de base (2) du modèle auxiliaire présente l'allure du contour du vitrage pour éclairage dans cette zone compte tenu de l'épaisseur de l'élément structurel flexible à insérer dans le creux.

16. Procédé selon la revendication 12, caractérisé en ce que l'élément structurel flexible (10) est inséré de telle façon dans le creux (6) de la forme de base (2) qu'il prend l'allure du contour du fond du creux.

17. Procédé selon la revendication 12, caractérisé en ce que le moule est réalisé en silicone, fabriqué en deux parties et que sa dureté Shore est dimensionnée de façon qu'elle est à peu près de 40 à 45.

18. Procédé selon la revendication 12, le vitrage pour éclairage présentant différents segments de couleur différente, caractérisé en ce qu'on moule d'abord un vitrage pour éclairage monochrome, qu'on le coupe après le durcissement et que le ou les prochains segments en couleur sont moulés au cours d'un moulage suivant.

19. Procédé selon une des revendications précédentes 12 à 18, caractérisé en ce que le moulage du vitrage pour éclairage se fait par technique de moulage à vide.
